# FASCICULE DE BREVET EUROPEEN

(11) **EP 4 090 880 B1**
(45) Date de publication et mention de la délivrance du brevet: **15.05.2024**
(21) Numéro de dépôt: 20820231.7
(22) Date de dépôt: 11.12.2020
(51) Int. Cl.: F17C 13/08, F17C 5/00, F17C 6/00, F17C 7/02, F17C 9/00

(54) **INSTALLATION ET UN PROCÉDÉ DE STOCKAGE ET DE DISTRIBUTION DE FLUIDE CRYOGÉNIQUE**
ANLAGE UND VERFAHREN ZUM LAGERN UND VERTEILEN EINES KRYOGENEN FLUIDS
PLANT AND METHOD FOR STORING AND DISTRIBUTING CRYOGENIC FLUID

(30) Priorité: 17.01.2020 FR 2000477
(43) Date de publication de la demande: 23.11.2022
(73) Titulaire: L'Air Liquide, Société Anonyme pour l'Etude et l'Exploitation des Procédés Georges Claude, 75007 Paris (FR)
(72) Inventeur: BERNHARDT, Jean-Marc, 38360 SASSENAGE (FR)
(74) Mandataire: Air Liquide
(86) Numéro de dépôt international: PCT/EP2020/085673
(87) Numéro de publication internationale: WO 2021/144087

(56) Documents cités:
- WO-A1-2019/102155
- WO-A2-2015/114283
- KR-A- 20130 050 820
- US-A- 5 771 946
- US-A1- 2018 016 130

## Description

L'invention concerne une installation et un procédé de stockage et de distribution de fluide cryogénique.

L'invention concerne plus particulièrement une installation de stockage et de distribution de fluide cryogénique liquéfié sous pression, notamment d'hydrogène liquéfié, l'installation comprenant une source de gaz liquéfié et un organe de distribution, l'organe de distribution comprenant une première entrée de fluide reliée à la source de gaz liquéfié via un ensemble de conduites et une seconde extrémité destinée à être raccordée à un utilisateur du gaz liquéfié sous pression fourni par l'organe de distribution, la source comprenant un premier stockage de gaz liquéfié configuré pour stocker et fournir du gaz liquéfié à l'organe de distribution à la première pression déterminée.

En raison de sa densité plus grande, l'hydrogène sous forme liquide est préféré à l'hydrogène sous forme gazeuse lorsque de grandes quantités de produit doivent être transportées sur de grandes distances.

En revanche, la faible densité du liquide comparativement à l'eau par exemple limite la pression disponible par hauteur hydrostatique. Ainsi, la basse température de l'hydrogène liquide peut engendrer des pertes par évaporation assez importantes lors des transferts.

Les systèmes de déchargement de camions et les réservoirs des stations de fourniture d'hydrogène peuvent ainsi engendrer des pertes pouvant aller jusqu'à 15 % de la production. Ces pertes par pressurisation des camions peuvent bien sûr être perdu au niveau de chaque station ou récupérées, réchauffées, recomprimées et réinjectées dans un liquéfacteur (ceci nécessite cependant un investissement dans un système de recirculation des pertes et un surdimensionnement du système de liquéfaction). Généralement les camions transportant des stockages mobiles venant du liquéfacteur doivent être pressurisé afin de décharger l'hydrogène liquide du camion vers le stockage fixe de la station. Ce stockage fixe est maintenu sous pression afin de garantir le fonctionnement de la pompe liquide qu'il alimente (ou pour la fourniture d'hydrogène sous pression à un utilisateur).

La pressurisation du stockage mobile est réalisée généralement par évaporation et réchauffage d'hydrogène du camion (Unité d'augmentation de pression « PBU ») qui est réinjecté dans le réservoir. Ceci introduit donc de l'énergie dans le camion.

Une fois la quantité de liquide transférée vers la station fixe, le camion de livraison peut aller approvisionner une autre station ou retourner s'approvisionner au liquéfacteur. Le mouvement du camion va permettre une réduction de la pression grâce au mouvement du liquide dans le stockage et son contact avec la phase vapeur. En revanche, la pression résultante sera toujours supérieure à la pression initiale du fait de l'ajout d'énergie dans le système.

Au final, le nombre de remplissages réalisés par le camion et la pression nécessaire pour ces stations déterminera la quantité d'hydrogène perdu ou à re-liquéfier au liquéfacteur après la tournée. Le document US 5 771 946 A décrit une installation de stockage et de distribution de fluide cryogénique liquéfié sous pression appartenant à l'état de la technique antérieur.

Un but de la présente invention est de pallier tout ou partie des inconvénients de l'art antérieur relevés ci-dessus.

A cette fin, l'installation selon l'invention, par ailleurs conforme à la définition générique qu'en donne le préambule ci-dessus, est essentiellement caractérisée en ce que la source comprend un deuxième stockage de gaz liquéfié configuré pour stocker du gaz liquéfié à une seconde pression déterminée qui est inférieure à la première pression déterminée du premier stockage de gaz liquéfié, l'installation comprenant une conduite de liaison munie d'un ensemble de vanne(s) reliant les premier et second stockages de gaz liquéfié pour permettre un transfert de fluide entre les deux stockages de gaz liquéfié, l'installation comprenant une conduite de remplissage munie d'un ensemble de vanne(s) et ayant une première extrémité reliée au deuxième stockage (3) de gaz liquéfié et une seconde extrémité destinée à être reliée à un stockage mobile d'approvisionnement en gaz liquéfié pour remplir la source.

Par ailleurs, des modes de réalisation de l'invention peuvent comporter l'une ou plusieurs des caractéristiques suivantes :
- l'organe de distribution comprend une deuxième entrée de fluide raccordée aux parties supérieures des premier et second stockages de gaz liquéfié via des conduites de transfert de vapeur respectives, lesdites conduites de transfert de vapeur étant munies d'un ensemble de vanne(s), lesdites conduites de transfert de vapeur étant configurées pour permettre le transfert de fluide sous pression, notamment de vapeur, entre l'organe de distribution et le premier et/ou le second stockage de gaz liquéfié,
- l'installation comprend une conduite de collecte de vapeur munie d'un ensemble de vanne(s) et comprenant une première extrémité raccordée à la deuxième entrée de fluide de l'organe de distribution et une seconde extrémité destinée à être raccordée à une extrémité supérieure d'un stockage mobile d'approvisionnement en gaz liquéfié pour transférer des vapeurs d'un stockage mobile vers l'organe (2) de distribution,
- les deux stockages de gaz liquéfié sont agencés relativement pour permettre le transfert de fluide liquéfié du second stockage vers le premier stockage par gravité,
- le second stockage de gaz liquéfié est situé au-dessus du premier stockage,
- le premier stockage de gaz liquéfié et le second stockage de gaz liquéfié sont logés dans un même réservoir comprenant deux compartiments superposés à fond commun et dans lequel le second stockage est formé par le compartiment supérieur et le premier stockage est formé par le compartiment inférieur,
- l'organe de distribution comprenant un mécanisme de pompage de fluide cryogénique configuré pour assurer un pompage de gaz liquéfié à partir de gaz liquéfié à une première pression déterminée,
- le premier le stockage de gaz liquéfié et le second stockage (4) de gaz liquéfié font partie chacun d'un conteneur élémentaire respectif comprenant chacun une première conduite de transfert de fluide ayant une première extrémité raccordée à une extrémité supérieure du stockage, une seconde conduite de transfert de fluide ayant une première extrémité raccordée à une extrémité inférieure du stockage, la première et la seconde conduite de transfert comprenant chacun un ensemble de vanne(s) respective(s), la première conduite de transfert comprend deux branches formant deux secondes extrémités raccordées en parallèle à la première extrémité de la première conduite de transfert, les deux secondes extrémités de la première conduite de transfert étant munie chacune d'un raccord de connexion fluidique respectif, la seconde conduite de transfert comprenant deux branches formant deux secondes extrémités raccordées en parallèle à la première extrémité de la seconde conduite de transfert, les deux secondes extrémités de la seconde conduite de transfert étant munie chacune d'un raccord de connexion fluidique respectif, une troisième conduite de liaison ayant une première extrémité raccordée à la première conduite de transfert et une seconde extrémité raccordée à la seconde conduite de transfert, ladite troisième conduite de liaison comprenant un ensemble de vanne(s), les conteneurs (1) élémentaires étant raccordés fluidiquement l'un à l'autre,
- au moins l'un des conteneurs élémentaires comprend une troisième conduite de liaison ayant une première extrémité raccordée à l'extrémité supérieure du réservoir, par exemple via la première conduite de transfert et une seconde extrémité raccordée à l'extrémité inférieure du réservoir, par exemple via la seconde conduite de transfert, ladite troisième conduite de liaison comprenant un ensemble de vanne(s), la première extrémité de la troisième conduite de liaison pouvant être reliée à la première extrémité de la première conduite de transfert, la seconde extrémité de la troisième conduite de liaison pouvant être reliée à la première extrémité de la seconde conduite de transfert.

L'invention concerne également un procédé de stockage et de distribution de fluide cryogénique liquéfié sous pression, notamment d'hydrogène liquéfié, au moyen d'une installation conforme à l'une quelconque des caractéristiques ci-dessus ou ci-dessous, le procédé comprenant un remplissage du deuxième stockage de fluide cryogénique avec du fluide cryogénique liquéfié à partir d'un stockage mobile d'approvisionnement via la conduite de remplissage.

Selon d'autres particularités possibles :
- le procédé comprend, préalablement au remplissage du deuxième stockage de fluide cryogénique, une étape d'augmentation de la pression au sein du stockage mobile d'approvisionnement, le remplissage du deuxième stockage de fluide cryogénique à partir du stockage mobile étant réalisé par une mise en relation fluidique avec un différentiel de pression entre le stockage mobile d'approvisionnement et le deuxième stockage de fluide,
- le procédé comprend une étape de transfert de fluide liquéfié du second stockage de gaz liquéfie vers le premier stockage de gaz liquéfié par une mise en relation fluidique de ces derniers avec un différentiel de pression,
- le procédé comprend, préalablement à l'étape de transfert de fluide liquéfié du second stockage de gaz liquéfie vers le premier stockage de gaz liquéfié, une étape de d'équilibrage de pression entre le premier stockage et le second stockage de gaz liquéfié,
- le procédé comprend, après l'étape de d'équilibrage de pression entre le premier stockage de gaz liquéfié et le second stockage de gaz liquéfié, une étape diminution de la pression dans le second stockage de gaz liquéfié,
- l'étape diminution de la pression dans le second stockage de gaz liquéfié comprend au moins un parmi : un équilibrage de pression entre le second stockage de gaz liquéfié et un stockage fixe ou mobile, un transfert de gaz sous pression du second stockage de gaz vers un utilisateur de gaz tel qu'une pile à combustible,
- le procédé comprend une étape de transfert de fluide cryogénique liquéfié à la première pression du premier stockage de gaz liquéfié vers l'organe de distribution,
- le procédé comprend, simultanément ou postérieurement à l'étape de transfert de fluide cryogénique liquéfié à la première pression du premier stockage de gaz liquéfié vers l'organe de distribution, une étape de transfert de vapeur sous pression de l'organe (2) de distribution vers premier stockage de gaz.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue schématique et partielle illustrant la structure et le fonctionnement d'une installation conforme à un exemple de réalisation de l'invention dans une première configuration de fonctionnement,
[Fig. 2] représente une vue schématique et partielle illustrant la structure et le fonctionnement d'une installation conforme à un exemple de réalisation de l'invention dans une deuxième configuration de fonctionnement,
[Fig. 3] représente une vue schématique et partielle illustrant la structure et le fonctionnement d'une installation conforme à un exemple de réalisation de l'invention dans une troisième configuration de fonctionnement,
[Fig. 4] représente une vue schématique et partielle illustrant la structure et le fonctionnement d'une installation conforme à un exemple de réalisation de l'invention dans une quatrième configuration de fonctionnement,
[Fig. 5] représente une vue schématique et partielle illustrant la structure et le fonctionnement d'une installation conforme à un exemple de réalisation de l'invention dans une cinquième configuration de fonctionnement,
[Fig. 6] représente une vue schématique et partielle illustrant la structure et le fonctionnement d'une installation conforme à un exemple de réalisation de l'invention dans une sixième configuration de fonctionnement,
[Fig. 7] représente une vue schématique et partielle illustrant la structure et le fonctionnement d'une installation conforme à un exemple de réalisation de l'invention dans une septième configuration de fonctionnement,
[Fig. 8] représente une vue schématique et partielle illustrant un détail d'une variante possible de réalisation de la source de l'installation selon l'invention,
[Fig. 9] représente une vue schématique et partielle illustrant la structure et le fonctionnement d'une installation conforme à un autre exemple de réalisation de l'invention.

L'installation 1 de stockage et de distribution de fluide cryogénique liquéfié sous pression représenté schématiquement, notamment pour de l'hydrogène liquéfié, comprend une source 3, 4 de gaz liquéfié et un organe 2 de distribution. L'organe 2 de distribution comprend une première entrée de fluide reliée à la source 3, 4 de gaz liquéfié via un ensemble de conduites et une seconde extrémité destinée à être raccordée à au moins un utilisateur du gaz liquéfié sous pression fourni par l'organe 2 de distribution. L'organe 2 de distribution comprend par exemple un mécanisme de pompage de fluide cryogénique telle qu'une pompe, configuré pour assurer un pompage de gaz liquéfié dans le source (à une première pression déterminée) pour transférer ce fluide sous pression vers un utilisateur (par exemple pour fournir du fluide à haute pression à un réservoir de véhicule à remplir, par exemple entre 200 et 1000bar, notamment entre 200 et 800bar) . L'organe 2 de distribution peut comporter également un système de vaporisation (réchauffage) du liquide cryogénique pompé.

La source comprend au moins un premier stockage 3 de gaz liquéfié configuré pour stocker et fournir du gaz liquéfié à l'organe 2 de distribution à la première pression déterminée. C'est-à-dire que le premier stockage 3 est relié à une première entrée de l'organe de pompage de l'organe 2 de distribution pour l'alimenter en liquide cryogénique à des conditions thermodynamiques déterminées, notamment de pression. Par exemple, le premier stockage 3 est relié à la première entrée de l'organe 2 distribution (et de pompage) via une conduite 5 munie d'un ensemble de vanne(s) 15.

La source comprend au moins un deuxième stockage 4 de gaz liquéfié configuré pour stocker du gaz liquéfié à de secondes condition thermodynamique et notamment une seconde pression déterminée qui est généralement inférieure à la première pression déterminée du premier stockage 3 de gaz liquéfié.

Enfin, l'installation 1 comprend une conduite 8 de liaison munie d'un ensemble de vanne(s) 18 reliant les premier 3 et second 4 stockages de gaz liquéfié pour permettre un transfert de fluide entre les deux stockages 3, 4 de gaz liquéfié. De plus, l'installation 1 comprend une conduite 11 de remplissage munie d'un ensemble de vanne(s) 12 et ayant une première extrémité reliée au deuxième stockage 4 de gaz liquéfié et une seconde extrémité destinée à être reliée à un stockage 20 mobile d'approvisionnement en gaz liquéfié pour remplir la source.

Cette architecture de source à deux stockages 3, 4 de gaz liquéfié (ou deux ensembles de stockages de gaz liquéfié) ayant des pressions de stockage respectives distinctes permet de limiter l'augmentation de pression des stockages 20 mobiles lors du remplissage de la source. En effet, le second stockage 4 peut être configuré pour ne pas alimenter directement l'organe 2 de distribution. Ainsi, ce second stockage 4 de gaz liquéfié peut être configuré pour stocker le gaz liquéfié à une seconde pression (par exemple entre 1 bar et 8 bar et notamment entre 1,5 bar et 6 bar et par exemple 2 bar) inférieure à la première pression (par exemple comprise entre 1 bar et 12 bar, notamment entre 2 bar et 8 bar, par exemple 6 bar) nécessaire au bon fonctionnement de l'organe 2 de distribution. Par exemple la seconde pression peut être inférieure à la première pression d'une valeur comprise entre 0.5 et 10 bar.

Ceci permet de limiter la pression du stockage 20 mobile de livraison devant approvisionner l'installation 1 puisque le stockage 20 mobile doit s'adapter à la seconde pression déterminée relativement plus basse. Ceci permet de limiter les pertes de produit gazeux lors des remplissages des sources car le stockage 20 mobile peut être maintenu à relativement plus basse pression pendant ses trajets (par exemple un bar au-dessus de la pression dans le second stockage 4 de gaz liquéfié) et nécessite moins d'étape(s) de pressurisation (injection de chaleur).

Le transfert du second stockage 4 de gaz liquéfié (pression relativement plus basse) vers le premier stockage 3 de gaz liquéfié (pression relativement plus élevée) peut être réalisé après approvisionnement par le stockage 20 mobile et selon un processus plus lent.

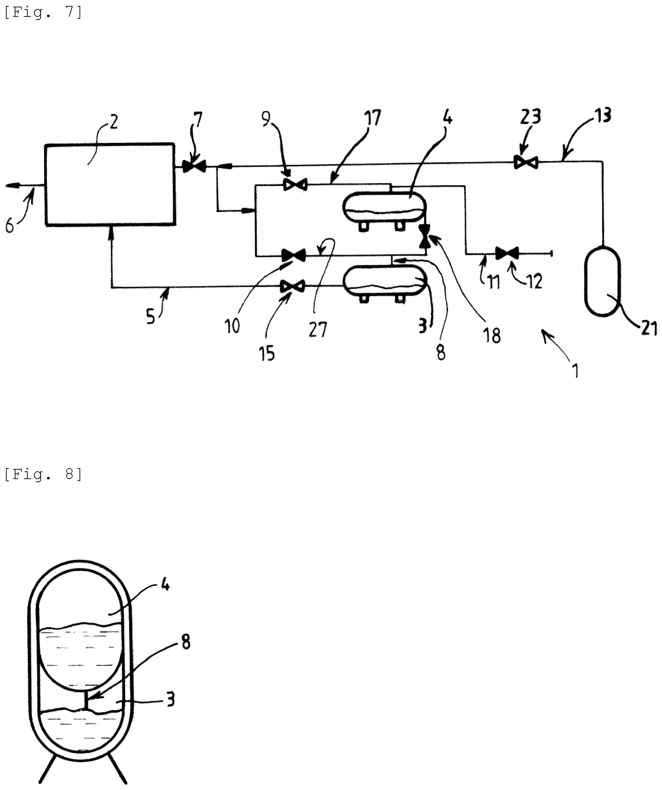

De préférence, les deux stockages 3, 4 de gaz liquéfié sont agencés relativement pour permettre le transfert de fluide liquéfié du second stockage 4 vers le premier stockage 3 par gravité. Par exemple, le second stockage 4 de gaz liquéfié est situé au-dessus du premier stockage 3. Selon un mode de réalisation possible illustré à la [Fig. 7], le premier stockage 3 de gaz liquéfié et le second stockage 4 de gaz liquéfié peuvent même être logés dans un même réservoir comprenant deux compartiments superposés à fond commun et dans lequel le second stockage 4 est formé par le compartiment supérieur et le premier stockage 3 est formé par le compartiment inférieur.

De plus, les capacités (volumes de stockage) des premier 3 et second 4 stockages de gaz liquéfié peuvent être différentes. Ceci permet d'optimiser les capacités en fonction de leurs usages.

Comme illustré, l'organe 2 de distribution comprend de préférence une deuxième entrée de fluide raccordée aux parties supérieures des premier 3 et second 4 stockages de gaz liquéfié via des conduites 17, 27 de transfert de vapeur munies d'un ensemble de vanne(s) 7, 9, 10.

Par exemple, les parties supérieures des premier 3 et second 4 stockages de gaz liquéfié sont reliées à la seconde entrée de l'organe 2 de distribution via respectivement deux conduites 17, 27 de transfert de vapeur agencées en parallèle et munies chacune d'une vanne 9, 10. De plus, une vanne 7 commune peut être prévue dans une portion commune des deux conduites 17, 27 de transfert raccordée à la seconde entrée. Ces conduites 17, 27 de transfert de vapeur sont configurées pour permettre le transfert de fluide sous pression, notamment de vapeur, entre l'organe 2 de distribution et le premier 3 et/ou le second 4 stockage de gaz liquéfié (de préférence dans les deux sens).

L'installation 1 comprend de préférence également une conduite 13 de collecte de vapeur munie d'un ensemble de vanne(s) 23 et comprenant une première extrémité raccordée à la deuxième entrée de fluide de l'organe 2 de distribution et une seconde extrémité destinée à être raccordée à une extrémité supérieure d'un stockage 20 mobile d'approvisionnement en gaz liquéfié. Cette conduite 13 de collecte de vapeur permet de transférer des vapeurs d'un stockage mobile 20 vers l'organe 2 de distribution ou les stockages 3,4 (et inversement).

Les figures décrivent différentes configuration possibles d'utilisation (stockage, distribution et approvisionnement). Les vannes sont représentées en noir ou en blanc selon qu'elle sont respectivement fermées ou ouvertes.

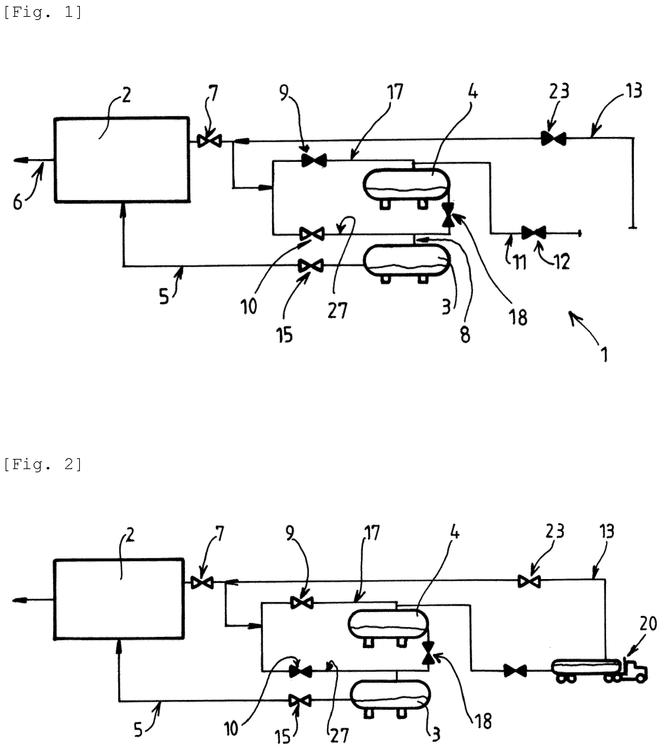

Dans la configuration de la [Fig. 1] le premier stockage 3 de gaz liquéfié peut alimenter l'organe 2 de distribution en gaz liquéfié à la première pression (vannes 15 ouverte). Les éventuelles vapeurs produites dans l'organe 2 de distribution (gaz de vaporisation de pompage par exemple, gaz de vaporisation d'une pompe, ou tout autre gaz de vaporisation « boil-off ») peuvent être renvoyées dans le premier stockage 3 de gaz liquéfié (via la conduite 27 de transfert de vapeur avec les vannes 7, 10 correspondantes ouvertes).

Dans la configuration de la [Fig. 2], un stockage 20 mobile d'approvisionnement en gaz liquéfié vient remplir le second stockage 4 de gaz liquéfié. La seconde extrémité de la conduite 11 de remplissage est reliée à un stockage 20 mobile d'approvisionnement en gaz liquéfié. De plus, la seconde extrémité de la conduite 13 de collecte de vapeur est raccordée à la partie supérieure du stockage 20 mobile d'approvisionnement en gaz liquéfié (de préférence via la vanne 7 commune des conduites 17, 27 de transfert de vapeur).

Dans une première phase, un équilibrage de pression peut être réalisé entre le stockage 20 mobile d'approvisionnement et le second stockage 4 de gaz liquéfié via par exemple l'ouverture des vannes 23 et 9 des conduites 13 de collecte de vapeur et de la conduites 17 de transfert de vapeur correspondantes.

Pour réaliser un transfert de liquide par différentiel de pression entre le stockage 20 mobile et le second stockage 4 de gaz liquéfié (sans pompage), la pression dans le stockage 20 mobile d'approvisionnement doit être supérieure à la pression dans le second stockage 4 de gaz liquéfié. Ou à défaut le stockage 20 mobile doit être équipé d'une pompe.

La pression dans le stockage 20 mobile peut être augmentée si nécessaire par auto-pressurisation (classiquement en prélevant, réchauffant et réinjectant du fluide dans le stockage 20 mobile) .

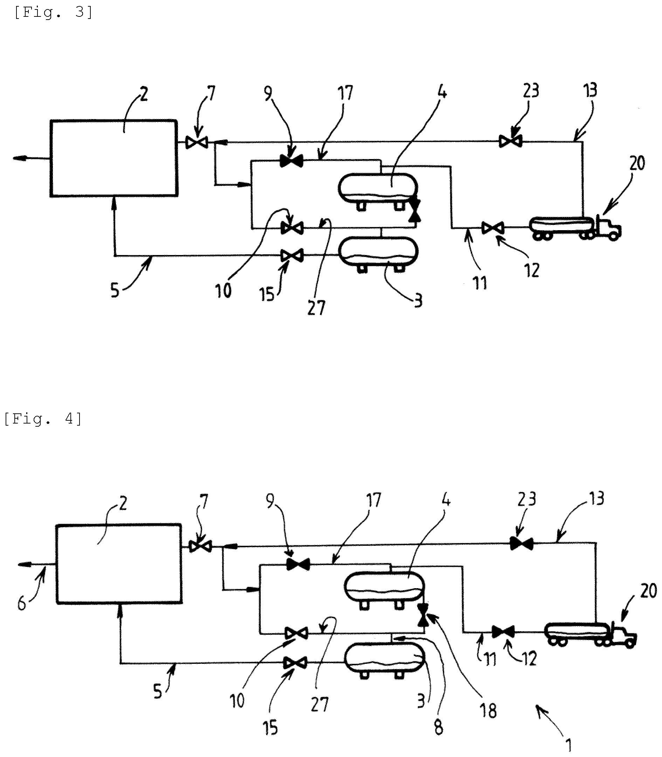

Cette pression peut être augmentée également en transférant du fluide sous pression fourni par l'organe 2 de distribution (via la conduite 13 de collecte de gaz et ouverture des vannes 23, 7 concernées) ou par le premier stockage 3 en remplacement du second stockage 4 (via les conduite 13, 27 et ouverture des vannes 10 et fermeture des vannes 9 concernées). Comme illustré à la [Fig. 3], du gaz sous pression de vaporisation généré dans l'organe 2 de distribution peut être transféré simultanément ou de façon séquentielle dans le premier stockage 3 de gaz liquéfié via la conduite 27 de transfert de vapeur (ouverture des vannes 7 et 10 correspondantes).

Lorsque la pression dans le stockage 20 mobile est supérieure à la pression dans le second stockage 4 de gaz, le transfert de gaz liquéfié du stockage 20 mobile vers le second stockage 4 de gaz liquéfié peut être réalisé par différentiel de pression en ouvrant la vanne 12 de la conduite 11 de remplissage. Ceci est représenté à la [Fig. 3] . Comme illustré, de préférence, le second stockage 4 de gaz liquéfié est rempli par sa partie supérieure.

Comme précédemment, du gaz sous pression de vaporisation généré dans l'organe 2 de distribution peut être transféré simultanément ou de façon séquentielle dans le premier stockage 3 de gaz liquéfié via la conduite 27 de transfert de vapeur (ouverture des vannes 7 et 10 correspondantes). De même, du gaz sous pression de vaporisation généré dans l'organe 2 de distribution peut être transféré simultanément ou de façon séquentielle dans le stockage 20 mobile via la conduite 13 de collecte de vapeur et l'ouverture des vannes 7, 23 concernées.

Lorsque le second stockage 4 de gaz liquéfié est rempli, le stockage 20 mobile d'approvisionnement peut se déconnecter après fermeture des vannes 12, 23 de la conduite 13 de collecte de vapeur et de la conduite 11 de remplissage comme illustré à la [Fig. 4].

Si la pression dans le premier stockage 3 de gaz liquéfié n'est suffisamment basse pour recevoir du gaz liquéfié liquide du second stockage 4 de gaz liquéfié, il peut être nécessaire de pressuriser le second stockage 4 de gaz liquéfié à la pression dans le premier stockage 3 de gaz liquéfié (ou au-dessus de la pression dans le premier stockage 3 de gaz liquéfié).

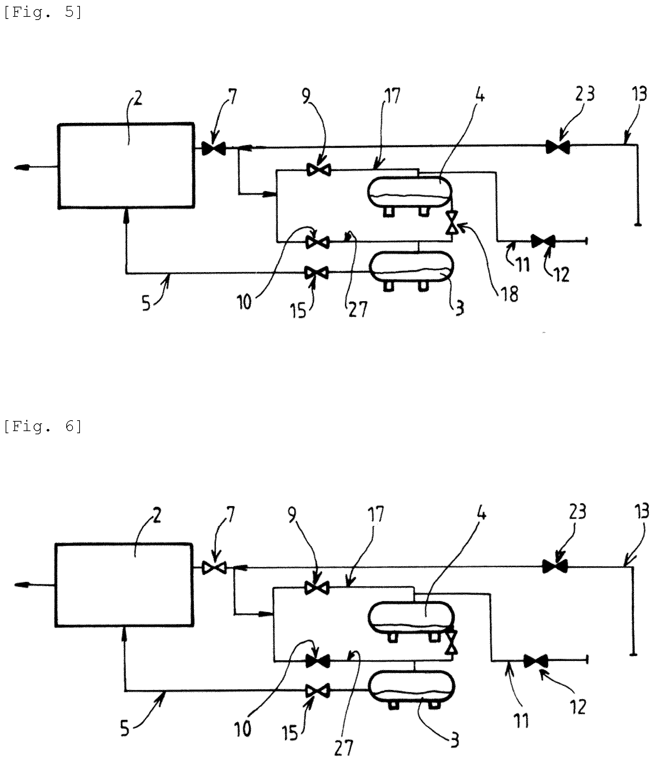

Comme illustré à la [Fig. 5], dans un premier temps, un équilibrage de pression peut être prévu entre les premier 3 et second 4 stockages de gaz liquéfié. Ceci peut être réalisé en ouvrant les vannes 9, 10 des conduites 17, 27 de transfert de vapeur reliant les parties supérieures desdits deux stockages 3, 4.

Si le second stockage 4 de gaz liquéfié est positionné à une altitude plus élevé que le premier stockage 3 de gaz liquéfié, un transfert de gaz liquéfié liquide du second stockage 4 de gaz liquéfié vers le premier stockage 3 de gaz liquéfié peut être réalisé par gravité.

Sinon (ou de façon additionnelle), le second stockage 4 de gaz liquéfié peut être pressurisé à une pression supérieure à la pression dans le premier stockage 3 de gaz liquéfié. Ceci peut être réalisé en fermant la vanne 9 dans la conduite 17 de transfert de vapeur reliée au second stockage 4 de gaz liquéfié et en augmentant la pression dans ce dernier. Par exemple, cette augmentation de pression peut être réalisée par tout moyen connu (via un évaporateur et/ou un réchauffeur).

La [Fig. 6] décrit un exemple de remplissage du premier stockage 3 de gaz liquéfié avec du gaz liquéfié provenant du second stockage 4 de gaz liquéfié. La vanne 18 de la conduite 8 de liaison est ouverte. Dans le cas d'une alimentation par le haut : le gaz liquéfié pénètre dans le premier 3 stockage de gaz liquéfié par le haut et y refroidi les vapeurs présentes en partie supérieure. Ceci fait baisser la pression dans le premier 3 stockage de gaz liquéfié. Cette baisse de pression accélère le transfert de liquide (différentiel de pression).

Ce transfert de liquide peut être réalisé pendant une durée aussi longue que nécessaire selon les architectures et volumes relatifs des deux stockages 3, 4 de gaz liquéfié.

Lorsque le second stockage 4 de gaz liquéfié est vidé cette vanne 18 de la conduite 8 de liaison est refermée. Les premier 3 et second 4 stockages de gaz liquéfié sont à nouveau à une pression identique via l'ouverture de la vanne 10 de la conduite 27 de transfert de vapeur reliée au premier 3 stockage de gaz liquéfié.

Ensuite, comme illustré à la [Fig. 7] pour permettre un prochain remplissage du second stockage 4 de gaz liquéfié, la pression dans ce dernier peut à nouveau être abaissée à une pression basse compatible avec la pression du stockage 20 mobile d'approvisionnement.

Cette baisse de pression peut être réalisée en transférant du gaz sous pression vers un stockage 21 fixe ou mobile 20 par équilibrage de pression. Ceci permet d'augmenter avantageusement le cas échant la pression dans un tel stockage 20 mobile d'approvisionnement qui le nécessiterait (ouvertures des vannes 9 et 23 des conduite 17 de transfert de vapeur et 13 de collecte de vapeur) . Ceci permet de remplacer le cas échant un système d'auto-pressurisation d'un stockage 20 mobile d'approvisionnement.

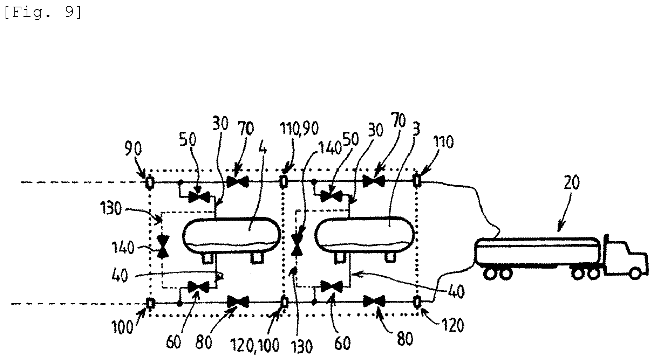

Comme illustré à la [Fig. 9], l'un au moins des stockages 3, 4 de gaz liquéfié de la source de gaz liquéfié peut être composé d'un réservoir d'un conteneur élémentaire modulaire. Ledit conteneur est muni d'une première conduite 30 de transfert de fluide ayant une première extrémité raccordée à une extrémité supérieure du réservoir 3, 4. Le réservoir 3, 4 est muni d'une seconde conduite 40 de transfert de fluide ayant une première extrémité raccordée à une extrémité inférieure du réservoir 3, 4. La première 30 et la seconde 40 conduite de transfert comprennent chacune un ensemble de vanne(s) respective(s). La première conduite 30 de transfert comprend deux branches formant deux secondes extrémités raccordées en parallèle à la première extrémité de la première 30 conduite de transfert, les deux secondes extrémités de la première conduite 30 de transfert étant munie chacune d'un raccord de connexion fluidique 90, 110 respectif. La seconde conduite 40 de transfert comprend deux branches formant deux secondes extrémités raccordées en parallèle à la première extrémité de la seconde conduite 40 de transfert, les deux secondes extrémités de la seconde conduite 40 de transfert étant munie chacune d'un raccord de connexion fluidique 100, 120 respectif. Les raccords de connexion fluidique 90, 100, 110, 120 situés aux secondes extrémités des conduites de transfert sont de préférence des raccords de type à connexion rapide.

La première conduite 30 de transfert comprend par exemple une première vanne 50 située à proximité de sa première extrémité et une seconde vanne 70 situé au niveau d'une des deux secondes extrémités. La seconde conduite 40 de transfert comprend par exemple de la même façon une première vanne 60 située à proximité de sa première extrémité et une seconde vanne 80 situé au niveau d'une des deux secondes extrémités.

Chaque conteneur élémentaire peut comprendre une troisième conduite 130 de liaison ayant une première extrémité raccordée à l'extrémité supérieure du réservoir, par exemple via la première conduite 30 de transfert et une seconde extrémité raccordée à l'extrémité inférieure du réservoir, par exemple via la seconde conduite 40 de transfert, ladite troisième conduite 130 de liaison comprenant un ensemble de vanne(s) 140. La première extrémité de la troisième conduite 130 de liaison est reliée à la première extrémité de la première conduite 30 de transfert. La seconde extrémité de la troisième conduite 13 de liaison est reliée à la première extrémité de la seconde conduite 40 de transfert.

Les deux conteneurs élémentaires sont reliés et permettent ainsi de raccorder en série ou en parallèle les deux stockages 3, 4 correspondants.

Dans cet exemple, un premier conteneur élémentaire (à droite) est raccordé en série à un second conteneur (à gauche). Une seconde extrémité 110 de la première conduite 30 de transfert du second stockage 4 est raccordée à une seconde extrémité 90 de la première conduite 30 de transfert du premier stockage 3. Une seconde extrémité 120 de la seconde conduite 40 de transfert du second stockage 4 est raccordée à une seconde extrémité 100 de la seconde conduite 40 de transfert du premier stockage 3.

Les deux stockage 3, 4 des conteneurs élémentaires peuvent ainsi être raccordés en série et/ou en parallèle à une source et/ou un récepteur raccordée(s) aux extrémité libres 90, 100 (à gauche) du second stockage 4.

Les secondes extrémités 110 et 120 des première conduite 30 de transfert et seconde conduite 40 de transfert du premier stockage 3 (à droite) peuvent être reliées respectivement aux extrémité supérieure et inférieure d'un réservoir 20 de gaz liquéfié mobile d'approvisionnement.

Dans la configuration de la [Fig. 9], un équilibrage de pression entre la partie supérieure du réservoir 20 mobile et la partie supérieure du premier stockage 3 peut être réalisé (via la première conduite 30 et l'ouverture des vannes concernées 70, 50 du premier stockage 3 et la fermeture des autres vannes 80, 140, 50) .

Un transfert de liquide du réservoir 20 mobile vers le premier stockage 3 (par le haut) peut être réalisé en mettant en relation l'extrémité inférieure du réservoir 20 mobile uniquement avec la partie supérieure du premier stockage 3 (par exemple via les conduites 40 et 130 concernées et via l'ouverture des vannes appropriées 80, 60, 140). Simultanément, la partie supérieure du réservoir 20 mobile peut être mise en relation fluidique uniquement avec la partie supérieure du second stockage 4 (via les conduites 30 concernées et via l'ouverture des vannes appropriées 70, 50).

Pour déconnecter le stockage mobile du premier stockage, toutes les vannes 70, 50, 60, 80 140 du premier stockage peuvent être fermées.

Cette architecture permet également de transférer du gaz d'un utilisateur vers l'extrémité supérieure du ou des deux stockages 3, 4 via les conduites 30 (source de gaz raccordée à extrémité 90 à gauche) avec les vannes concernées ouvertes. Simultanément, les parties inférieures des stockages 3, 4 peuvent être isolées ou non de l'extrémité 100 pour fournir ou non du liquide à un utilisateur (raccordé à l'extrémité 100 à gauche), les vannes 140 étant fermées.

Un ou des stockage 3, 4 peut fournir du liquide via les conduites 40 concernées à l'extrémité 100 (à gauche) via l'ouverture des vannes 60, 80 appropriées tandis que les extrémités supérieures des stockages 3, 4 peuvent être isolées (vannes 50, 70 appropriées fermées).

## Revendications

1. Installation de stockage et de distribution de fluide cryogénique liquéfié sous pression, notamment d'hydrogène liquéfié, l'installation (1) comprenant une source (3, 4) de gaz liquéfié et un organe (2) de distribution, l'organe (2) de distribution comprenant une première entrée de fluide reliée à la source (3, 4) de gaz liquéfié via un ensemble de conduites (5) et une seconde extrémité (6) destinée à être raccordée à un utilisateur du gaz liquéfié sous pression fourni par l'organe (2) de distribution, la source (3, 4) comprenant un premier stockage (3) de gaz liquéfié configuré pour stocker et fournir du gaz liquéfié à l'organe (2) de distribution à la première pression déterminée, la source (3, 4) comprenant un deuxième stockage (4) de gaz liquéfié configuré pour stocker du gaz liquéfié à une seconde pression déterminée qui est inférieure à la première pression déterminée du premier stockage (3) de gaz liquéfié, l'installation (1) comprenant une conduite (8) de liaison munie d'un ensemble de vanne(s) (18) reliant les premier (3) et second (4) stockages de gaz liquéfié pour permettre un transfert de fluide entre les deux stockages (3, 4) de gaz liquéfié, l'installation (1) comprenant une conduite (11) de remplissage munie d'un ensemble de vanne(s) (12) et ayant une première extrémité reliée au deuxième stockage (4) de gaz liquéfié et une seconde extrémité destinée à être reliée à un stockage (20) mobile d'approvisionnement en gaz liquéfié pour remplir la source (3, 4), **caractérisée en ce que** l'organe (2) de distribution comprend une deuxième entrée de fluide raccordée aux parties supérieures des premier (3) et second (4) stockages de gaz liquéfié via des conduites (17, 27) de transfert de vapeur respectives, lesdites conduites (17, 27) de transfert de vapeur étant munies d'un ensemble de vanne(s) (9, 10), lesdites conduites (17, 27) de transfert de vapeur étant configurées pour permettre le transfert de fluide sous pression, notamment de vapeur, entre l'organe (2) de distribution et le premier (3) et/ou le second (4) stockage (3, 4) de gaz liquéfié.

2. Installation selon la revendication 1, **caractérisée en ce qu'**elle comprend une conduite (13) de collecte de vapeur munie d'un ensemble de vanne(s) (23) et comprenant une première extrémité raccordée à la deuxième entrée de fluide de l'organe (2) de distribution et une seconde extrémité destinée à être raccordée à une extrémité supérieure d'un stockage (20) mobile d'approvisionnement en gaz liquéfié pour transférer des vapeurs d'un stockage mobile (20) vers l'organe (2) de distribution.

3. Installation selon l'une quelconque des revendications 1 à 2, **caractérisée en ce que** les deux stockages (3, 4) de gaz liquéfié sont agencés relativement pour permettre le transfert de fluide liquéfié du second stockage (4) vers le premier stockage (3) par gravité.

4. Installation selon l'une quelconque des revendications 1 à 3, **caractérisée en ce que** le second stockage (4) de gaz liquéfié est situé au-dessus du premier stockage (3).

5. Installation selon l'une quelconque des revendications 1 à 4, **caractérisée en ce que** le premier stockage (3) de gaz liquéfié et le second stockage (4) de gaz liquéfié sont logés dans un même réservoir comprenant deux compartiments superposés à fond commun et dans lequel le second stockage (4) est formé par le compartiment supérieur et le premier stockage (3) est formé par le compartiment inférieur.

6. Installation selon l'une quelconque des revendications 1 à 5, caractérisée en ce que-l'organe (2) de distribution comprenant un mécanisme de pompage de fluide cryogénique configuré pour assurer un pompage de gaz liquéfié à partir de gaz liquéfié à une première pression déterminée.

7. Installation selon l'une quelconque des revendications 1 à 6, **caractérisée en ce que** le premier le stockage (3) de gaz liquéfié et le second stockage (4) de gaz liquéfié font partie chacun d'un conteneur élémentaire respectif comprenant chacun une première conduite (30) de transfert de fluide ayant une première extrémité raccordée à une extrémité supérieure du stockage (3, 4), une seconde conduite (40) de transfert de fluide ayant une première extrémité raccordée à une extrémité inférieure du stockage (3, 4), la première (30) et la seconde (40) conduite de transfert comprenant chacun un ensemble de vanne(s) respective(s), la première conduite (30) de transfert comprend deux branches formant deux secondes extrémités raccordées en parallèle à la première extrémité de la première (30) conduite de transfert, les deux secondes extrémités de la première conduite (30) de transfert étant munie chacune d'un raccord de connexion fluidique (99, 110) respectif, la seconde conduite (40) de transfert comprenant deux branches formant deux secondes extrémités raccordées en parallèle à la première extrémité de la seconde conduite (40) de transfert, les deux secondes extrémités de la seconde conduite (40) de transfert étant munie chacune d'un raccord de connexion fluidique (100, 120) respectif, une troisième conduite (130) de liaison ayant une première extrémité raccordée à la première conduite (30) de transfert et une seconde extrémité raccordée à la seconde conduite (40) de transfert, ladite troisième conduite (130) de liaison comprenant un ensemble de vanne(s) (14) et **en ce que** les conteneurs (1) élémentaires sont raccordés fluidiquement l'un à l'autre.

8. Procédé de stockage et de distribution de fluide cryogénique liquéfié sous pression, notamment d'hydrogène liquéfié, au moyen d'une installation (1) conforme à l'une quelconque des revendications 1 à 7, le procédé comprenant un remplissage du deuxième stockage (4) de fluide cryogénique avec du fluide cryogénique liquéfié à partir d'un stockage (20) mobile d'approvisionnement via la conduite (11) de remplissage.

9. Procédé selon la revendication 8, **caractérisé en ce qu'**il comprend, préalablement au remplissage du deuxième stockage (4) de fluide cryogénique, une étape d'augmentation de la pression au sein du stockage (20) mobile d'approvisionnement et **en ce que** le remplissage du deuxième stockage (4) de fluide cryogénique à partir du stockage (20) mobile est réalisé par une mise en relation fluidique avec un différentiel de pression entre le stockage (20) mobile d'approvisionnement et le deuxième stockage (4) de fluide.

10. Procédé selon l'une quelconque des revendications 8 à 9, **caractérisé en ce qu'**il comprend une étape de transfert de fluide liquéfié du second (4) stockage de gaz liquéfie vers le premier stockage (3) de gaz liquéfié par une mise en relation fluidique de ces derniers avec un différentiel de pression.

11. Procédé selon la revendication 10, **caractérisé en ce qu'**il comprend, préalablement à l'étape de transfert de fluide liquéfié du second (4) stockage de gaz liquéfie vers le premier stockage (3) de gaz liquéfié, une étape de d'équilibrage de pression entre le premier (3) et le second (4) stockage de gaz liquéfié.

12. Procédé selon la revendication 11, **caractérisé en ce qu'**il comprend, après l'étape de d'équilibrage de pression entre le premier (3) stockage de gaz liquéfié et le second (4) stockage de gaz liquéfié, une étape diminution de la pression dans le second (4) stockage de gaz liquéfié.

13. Procédé selon la revendication 12, **caractérisé en ce que** l'étape diminution de la pression dans le second (4) stockage de gaz liquéfié comprend au moins un parmi : un équilibrage de pression entre le second (4) stockage de gaz liquéfié et un stockage fixe ou mobile (20, 21), un transfert de gaz sous pression du second (4) stockage de gaz vers un utilisateur de gaz tel qu'une pile à combustible.

14. Procédé selon l'une quelconque des revendications 8 à 13, **caractérisé en ce qu'**il comprend une étape de transfert de fluide cryogénique liquéfié à la première pression du premier stockage (3) de gaz liquéfié vers l'organe (2) de distribution.

15. Procédé selon la revendication 8 à 13, **caractérisé en ce qu'**il comprend, simultanément ou postérieurement à l'étape de transfert de fluide cryogénique liquéfié à la première pression du premier stockage (3) de gaz liquéfié vers l'organe (2) de distribution, une étape de transfert de vapeur sous pression de l'organe (2) de distribution vers premier stockage (3) de gaz.

## Patentansprüche

1. Anlage zur Speicherung und Abgabe von verflüssigtem kryogenem Fluid unter Druck, insbesondere von verflüssigtem Wasserstoff, wobei die Anlage (1) eine Flüssiggasquelle (3, 4) und ein Abgabeorgan (2) umfasst, wobei das Abgabeorgan (2) einen ersten Fluideinlass, der über eine Leitungsanordnung (5) mit der Flüssiggasquelle (3, 4) verbunden ist, und ein zweites Ende (6), das dazu bestimmt ist, mit einem Verbraucher des vom Abgabeorgan (2) bereitgestellten, unter Druck stehenden Flüssiggases verbunden zu sein, umfasst, wobei die Quelle (3, 4) einen ersten Flüssiggasspeicher (3) umfasst, der dazu ausgelegt ist, Flüssiggas mit dem ersten bestimmten Druck zu speichern und dem Abgabeorgan (2) bereitzustellen, wobei die Quelle (3, 4) einen zweiten Flüssiggasspeicher (4) umfasst, der dazu ausgelegt ist, Flüssiggas mit einem zweiten bestimmten Druck, der niedriger als der erste bestimmte Druck des ersten Flüssiggasspeicher (3) ist, zu speichern, wobei die Anlage (1) eine mit einem Ventilsatz (18) versehene Verbindungsleitung (8) umfasst, die den ersten (3) und den zweiten Flüssiggasspeicher (4) verbindet, um einen Fluidtransfer zwischen den beiden Flüssiggasspeichern (3, 4) zu ermöglichen, wobei die Anlage (1) eine Füllleitung (11) umfasst, die mit einem Ventilsatz (12) ausgestattet ist und ein erstes Ende, das mit dem zweiten Flüssiggasspeicher (4) verbunden ist, und ein zweites Ende, das dazu bestimmt ist, mit einem mobilen Flüssiggasvorratsspeicher (20) zum Befüllen der Quelle (3, 4) verbunden zu sein, aufweist, **dadurch gekennzeichnet, dass** das Abgabeorgan (2) einen zweiten Fluideinlass umfasst, der über jeweilige Dampfübertragungsleitungen (17, 27) mit den oberen Teilen des ersten (3) und zweiten Flüssiggasspeichers (4) verbunden ist, wobei die Dampfübertragungsleitungen (17, 27) mit einem Ventilsatz (9, 10) versehen sind, wobei die Dampfübertragungsleitungen (17, 27) dazu ausgelegt sind, den Transfer von unter Druck stehendem Fluid, insbesondere von Dampf, zwischen dem Abgabeorgan (2) und dem ersten (3) und/oder zweiten (4) Flüssiggasspeicher (3, 4) zu ermöglichen.

2. Anlage nach Anspruch 1, **dadurch gekennzeichnet, dass** sie eine Dampfsammelleitung (13) umfasst, die mit einem Ventilsatz (23) versehen ist und ein erstes Ende, das mit dem zweiten Fluideinlass des Abgabeorgans (2) verbunden ist, und ein zweites Ende, das dazu bestimmt ist, mit einem oberen Ende eines mobilen Flüssiggasvorratsspeichers (20) verbunden zu sein, um Dämpfe von einem mobilen Speicher (20) zum Abgabeorgan (2) zu übertragen, umfasst.

3. Anlage nach einem der Ansprüche 1 bis 2, **dadurch gekennzeichnet, dass** die beiden Flüssiggasspeicher (3, 4) relativ zueinander angeordnet sind, um den Transfer von verflüssigtem Fluid aus dem zweiten Speicher (4) zum ersten Speicher (3) durch Schwerkraft zu ermöglichen.

4. Anlage nach einem der Ansprüche 1 bis 3, **dadurch gekennzeichnet, dass** sich der zweite Flüssiggasspeicher (4) über dem ersten Speicher (3) befindet.

5. Anlage nach einem der Ansprüche 1 bis 4, **dadurch gekennzeichnet, dass** der erste Flüssiggasspeicher (3) und der zweite Flüssiggasspeicher (4) in ein und demselben Behälter untergebracht sind, der zwei übereinanderliegende Kammern mit gemeinsamem Boden umfasst und in dem der zweite Speicher (4) durch die obere Kammer ausgebildet ist und der erste Speicher (3) durch die untere Kammer ausgebildet ist.

6. Anlage nach einem der Ansprüche 1 bis 5, **dadurch gekennzeichnet, dass** das Abgabeorgan (2) einen Mechanismus zum Pumpen von kryogenem Fluid umfasst, der dazu ausgelegt ist, das Pumpen von Flüssiggas aus Flüssiggas mit einem ersten bestimmten Druck zu gewährleisten.

7. Anlage nach einem der Ansprüche 1 bis 6, **dadurch gekennzeichnet, dass** der erste Flüssiggasspeicher (3) und der zweite Flüssiggasspeicher (4) jeweils Teil eines jeweiligen Elementarbehälters sind, der Folgendes umfasst: eine erste Fluidtransferleitung (30) mit einem ersten Ende, das mit einem oberen Ende des Speichers (3, 4) verbunden ist, eine zweite Fluidtransferleitung (40) mit einem ersten Ende, das mit einem unteren Ende des Speichers (3, 4) verbunden ist, wobei die erste (30) und die zweite Transferleitung (40) jeweils einen entsprechenden Ventilsatz umfassen, wobei die erste Transferleitung (30) zwei Zweige umfasst, die zwei zweite Enden bilden, die parallel mit dem ersten Ende der ersten Transferleitung (30) verbunden sind, wobei die beiden zweiten Enden der ersten Transferleitung (30) jeweils mit einem entsprechenden Fluidverbindungsanschluss (99, 110) verbunden sind, wobei die zweite Transferleitung (40) zwei Zweige umfasst, die zwei zweite Enden bilden, die parallel mit dem ersten Ende der zweiten Transferleitung (40) verbunden sind, wobei die beiden zweiten Enden der zweiten Transferleitung (40) jeweils mit einem entsprechenden Fluidverbindungsanschluss (100, 120) verbunden sind, eine dritte Verbindungsleitung (130) mit einem ersten Ende, das mit der ersten Transferleitung (30) verbunden ist, und einem zweiten Ende, das mit der zweiten Transferleitung (40) verbunden ist, wobei die dritte Verbindungsleitung (130) einen Ventilsatz (14) umfasst, und dadurch, dass die Elementarbehälter (1) fluidisch miteinander verbunden sind.

8. Verfahren zur Speicherung und Abgabe von verflüssigtem kryogenem Fluid unter Druck, insbesondere von verflüssigtem Wasserstoff, anhand einer Anlage (1) nach einem der Ansprüche 1 bis 7, wobei das Verfahren ein Befüllen des zweiten Speichers (4) für kryogenes Fluid mit verflüssigtem kryogenem Fluid aus einem mobilen Vorratsspeicher (20) über die Füllleitung (11) umfasst.

9. Verfahren nach Anspruch 8, **dadurch gekennzeichnet, dass** es vor dem Befüllen des zweiten Speichers (4) für kryogenes Fluid einen Schritt zur Erhöhung des Drucks innerhalb des mobilen Vorratsspeichers (20) umfasst und dass das Befüllen des zweiten Speichers (4) für kryogenes Fluid aus dem mobilen Speicher (20) durch eine fluidische Verbindung mit einem Druckunterschied zwischen dem mobilen Vorratsspeicher (20) und dem zweiten Fluidspeicher (4) erfolgt.

10. Verfahren nach einem der Ansprüche 8 bis 9, **dadurch gekennzeichnet, dass** es einen Schritt des Transfers von verflüssigtem Fluid aus dem zweiten Flüssiggasspeicher (4) in den ersten Flüssiggasspeicher (3) durch eine fluidische Verbindung letzterer mit einem Druckunterschied umfasst.

11. Verfahren nach Anspruch 10, **dadurch gekennzeichnet, dass** es vor dem Schritt des Transfers von verflüssigtem Fluid aus dem zweiten Flüssiggasspeicher (4) in den ersten Flüssiggasspeicher (3) einen Schritt des Druckausgleichs zwischen dem ersten (3) und dem zweiten Flüssiggasspeicher (4) umfasst.

12. Verfahren nach Anspruch 11, **dadurch gekennzeichnet, dass** es nach dem Schritt des Druckausgleichs zwischen dem ersten Flüssiggasspeicher (3) und dem zweiten Flüssiggasspeicher (4) einen Schritt der Verringerung des Drucks im zweiten Flüssiggasspeicher (4) umfasst.

13. Verfahren nach Anspruch 12, **dadurch gekennzeichnet, dass** der Schritt der Verringerung des Drucks im zweiten Flüssiggasspeicher (4) mindestens einen der folgenden Schritte umfasst: Druckausgleich zwischen dem zweiten Flüssiggasspeicher (4) und einem festen oder mobilen Speicher (20, 21), Transfer von Druckgas aus dem zweiten Gasspeicher (4) zu einem Gasverbraucher wie einer Brennstoffzelle.

14. Verfahren nach einem der Ansprüche 8 bis 13, **dadurch gekennzeichnet, dass** es einen Schritt des Transfers von verflüssigtem kryogenem Fluid mit einem ersten Druck aus dem ersten Flüssiggasspeicher (3) zum Abgabeorgan (2) umfasst.

15. Verfahren nach Anspruch 8 bis 13, **dadurch gekennzeichnet, dass** es gleichzeitig mit oder nach dem Schritt des Transfers von verflüssigtem kryogenem Fluid mit einem ersten Druck aus dem ersten Flüssiggasspeicher (3) zum Abgabeorgan (2) einen Schritt des Transfers von Dampf unter Druck aus dem Abgabeorgan (2) zum ersten Gasspeicher (3) umfasst.

## Claims

1. Installation for storing and dispensing pressurized liquefied cryogenic fluid, in particular liquefied hydrogen, the installation (1) comprising a liquefied gas source (3, 4) and a dispenser (2), the dispenser (2) comprising a first fluid inlet connected to the liquefied gas source (3, 4) via a set of pipes (5) and a second end (6) intended to be attached to a user of the pressurized liquefied gas supplied by the dispenser (2), the source (3, 4) comprising a first liquefied gas store (3) configured to store and supply liquefied gas to the dispenser (2) at the first determined pressure, the source (3, 4) comprising a second liquefied gas store (4) configured to store liquefied gas at a second determined pressure which is lower than the first determined pressure of the first liquefied gas store (3), the installation (1) comprising a connecting pipe (8) provided with a set of valve(s) (18) connecting the first liquefied gas store (3) and second liquefied gas store (4) to allow fluid to be transferred between the two liquefied gas stores (3, 4), the installation (1) comprising a filling pipe (11) provided with a set of valve (s) (12) and having a first end connected to the second liquefied gas store (4) and a second end intended to be connected to a mobile store (20) for supplying liquefied gas so as to fill the source (3, 4), **characterized in that** the dispenser (2) comprises a second fluid inlet attached to the upper parts of the first liquefied gas store (3) and second liquefied gas store (4) via respective vapour transfer pipes (17, 27), said vapour transfer pipes (17, 27) being provided with a set of valve (s) (9, 10), said vapour transfer pipes (17, 27) being configured to allow the transfer of pressurized fluid, in particular vapour, between the dispenser (2) and the first liquefied gas store (3) and/or the second liquefied gas store (4) (3, 4).

2. Installation according to Claim 1, **characterized in that** it comprises a vapour collection pipe (13) provided with a set of valve(s) (23) and comprising a first end attached to the second fluid inlet of the dispenser (2) and a second end intended to be attached to an upper end of a mobile store (20) for supplying liquefied gas so as to transfer vapours from a mobile store (20) to the dispenser (2).

3. Installation according to either one of Claims 1 and 2, **characterized in that** the two liquefied gas stores (3, 4) are arranged relatively so as to allow liquefied fluid to be transferred from the second store (4) to the first store (3) by gravity.

4. Installation according to any one of Claims 1 to 3, **characterized in that** the second liquefied gas store (4) is located above the first store (3).

5. Installation according to any one of Claims 1 to 4, **characterized in that** the first liquefied gas store (3) and the second liquefied gas store (4) are accommodated in one and the same tank comprising two superimposed compartments with a common base and in which the second store (4) is formed by the upper compartment and the first store (3) is formed by the lower compartment.

6. Installation according to any one of Claims 1 to 5, **characterized in that** the dispenser (2) comprises a cryogenic fluid pumping mechanism configured to pump liquefied gas from liquefied gas at a first determined pressure.

7. Installation according to any one of Claims 1 to 6, **characterized in that** the first liquefied gas store (3) and the second liquefied gas store (4) each form part of a respective basic container each comprising a first fluid transfer pipe (30) having a first end attached to an upper end of the store (3, 4), a second fluid transfer pipe (40) having a first end attached to a lower end of the store (3, 4), the first transfer pipe (30) and the second transfer pipe (40) each comprising a set of respective valve(s), the first transfer pipe (30) comprising two branches forming two second ends attached in parallel to the first end of the first transfer pipe (30), the two second ends of the first transfer pipe (30) each being provided with a respective fluidic connection fitting (99, 110), the second transfer pipe (40) comprising two branches forming two second ends attached in parallel to the first end of the second transfer pipe (40), the two second ends of the second transfer pipe (40) each being provided with a respective fluidic connection fitting (100, 120), a third connecting pipe (130) having a first end attached to the first transfer pipe (30) and a second end attached to the second transfer pipe (40), said third connecting pipe (130) comprising a set of valve (s) (14), and **in that** the basic containers (1) are fluidically attached to one another.

8. Method for storing and dispensing pressurized liquefied cryogenic fluid, in particular liquefied hydrogen, by means of an installation (1) according to any one of Claims 1 to 7, the method comprising filling the second cryogenic fluid store (4) with liquefied cryogenic fluid from a mobile supply store (20) via the filling pipe (11).

9. Method according to Claim 8, **characterized in that** it comprises, prior to the filling of the second cryogenic fluid store (4), a step of building up the pressure within the mobile supply store (20), and **in that** the second cryogenic fluid store (4) is filled from the mobile store (20) by placing the mobile supply store (20) and the second fluid store (4) in fluidic communication with a pressure difference.

10. Method according to either one of Claims 8 and 9, **characterized in that** it comprises a step of transferring liquefied fluid from the second liquefied gas store (4) to the first liquefied gas store (3) by placing the latter in fluidic communication with a pressure difference.

11. Method according to Claim 10, **characterized in that** it comprises, prior to the step of transferring liquefied fluid from the second liquefied gas store (4) to the first liquefied gas store (3), a step of equalizing pressure between the first liquefied gas store (3) and the second liquefied gas store (4).

12. Method according to Claim 11, **characterized in that** it comprises, after the step of equalizing pressure between the first liquefied gas store (3) and the second liquefied gas store (4), a step of reducing the pressure in the second liquefied gas store (4).

13. Method according to Claim 12, **characterized in that** the step of reducing the pressure in the second liquefied gas store (4) comprises at least one from among: a pressure equalization between the second liquefied gas store (4) and a mobile or fixed store (20, 21), a transfer of pressurized gas from the second gas store (4) to a gas user, such as a fuel cell.

14. Method according to any one of Claims 8 to 13, **characterized in that** it comprises a step of transferring liquefied cryogenic fluid at the first pressure from the first liquefied gas store (3) to the dispenser (2).

15. Method according to Claims 8 to 13, **characterized in that** it comprises, at the same time as or after the step of transferring liquefied cryogenic fluid at the first pressure from the first liquefied gas store (3) to the dispenser (2), a step of transferring pressurized vapour from the dispenser (2) to the first gas store (3).
